# EUROPEAN PATENT APPLICATION

(11) **EP 1 798 663 A2**
(43) Date of publication of application: **20.06.2007**
(21) Application number: 06026253.2
(22) Date of filing: 13.03.2002
(51) Int. Cl.: G06K 7/10

(54) **Fixed camera type optical reading equipment and methods for its installation and for the diagnostic of its alignment**

(62) Divisional of application: 02425147.2
(71) Applicant: DATALOGIC S.P.A., 40012 Lippo di Calderara di Reno (Bologna) (IT)
(72) Inventor: Piazzi, Guglielmo, 40068 San Lazzaro di Savena (BO) (IT); Mazzone, Claudio, 40056 Crespellano (BO) (IT); Saporetti, Claudio, 40139 Bologna (IT)
(74) Representative: Riccardi, Elisa

(57) **Abstract**

A fixed optical equipment for acquiring optical information associated with at least an object placed on a supporting plane is described, comprising a camera (10) having an array of photosensing elements (11) for acquiring an image of an acquisition zone on the supporting plane, characterized by comprising aiming means (30) suitable for generating a luminous aiming figure extended in at least a first direction having a predetermined geometric relationship with the view cone of the camera (10). Methods for its installation and for the diagnostic of its alignment are also described.

## Description

The present invention relates to a fixed optical reading equipment of the camera type and to methods for its installation and for the diagnostic of its alignment.

Hereinafter in the description and in the following claims, the expression "optical reading equipment" is used to indicate an equipment able to acquire optical information associated to an object placed on a supporting plane (for example, distance, volume, encumbrance, or data identifying it, particularly an optical code associated to the object) through the acquisition and the processing of an acquisition zone on the supporting plane.

Hereinafter in the description and in the following claims, under the expression "acquisition zone on the supporting plane", it is meant that the view cone of the camera is directed toward at least a portion of the supporting plane, the field of view being focused at a proper distance.

Hereinafter in the description and in the following claims, the expression "optical information" is used to indicate any graphical representation having the function of storing a coded or non-coded information. A particular example of optical information is comprised of linear or two-dimensional optical codes, wherein the information is coded trough suitable combinations of elements having a predetermined, for example squared, rectangular or hexagonal shape, of a dark color (normally black) separated by light elements (spaces, normally white), such as bar codes, stacked codes and two-dimensional codes in general, color codes, etc. The term "optical information" further comprises, more in general, other graphical shapes as well, including printed characters (letters,_ numbers, etc.) and particular shapes ("patterns") (such as, for example stamps, devices, signatures, fingerprints etc.). The term "optical information" further comprises graphical representations that may be detected, not only in the visible light range, but also in the range of wavelengths comprised between infrared and ultraviolet.

More particularly, the expression "fixed optical reading equipment" is used to indicate such an optical reading equipment for use without human activation ("unattended scanner"), particularly at a conveyor belt (or other moving means) on which articles to be detected move, and also at a station where an operator manually inputs the articles to be detected. The article detection may comprise reading an optical code and/or measuring a distance and/or a volume, etceteras.

Even more particularly, the invention relates to such a fixed optical reading equipment of the type comprising a camera having a one-dimensional (linear) or two-dimensional (matrix) array of photosensors, particularly of the CCD or C-MOS type.

In the last few years, indeed, the use of optical reading equipment of the camera type (linear or matrix, particularly CCD or C-MOS) has increasingly spread for fixed stations in systems for the optical recognition of bar codes, two-dimensional codes or characters (OCR= Optical Character Recognition) on objects placed on a supporting plane, particularly moving, such as for example parcels on a conveyor belt.

Typically this equipment is comprised of at least one properly-said camera and a lamp or solid state illumination system. In most of the real installations, there are also one or more deflecting mirrors. As will be clearer hereinafter, these components may be housed in a common container or in separate containers.

The camera has the function of collecting the image wherein the information has to be extracted (the whole image itself, or an optical code -as above defined- contained therein) through a proper optical system and dedicated opto-electronics and electronics, wherein an optical sensor comprised of a linear or matrix CCD or C-MOS type exists.

When the sensor is of the linear type, the image is collected through storing successive scans, each of which represents a very thin "line" of the whole image. The movement of the supporting plane, or of the object at the fixed reading station, allows successive lines to be accumulated, and therefore the whole image to be created.

The illumination system allows the acquisition zone to be illuminated with the proper light levels and illumination angles.

The deflecting mirror (or the deflecting mirrors) allows the installation of the reading equipment to be optimized from the point of view of the space taken up with respect to the conveyor belt, and therefore to direct the camera field of view in the desired area.

The alignment of an automatic camera type optical equipment, particularly of the linear camera type, has various critical factors, better highlighted hereinafter.

The high resolution of the used cameras and the high speed of the objects require optical arrangements having very short exposition times, therefore very open diaphragms, and, therefore, a low depth of field (DOF). In these conditions, very precise optical paths must be guaranteed.

In the present description and the following claims, the expression "depth of field" is used to indicate the range of camera-to-object distances, around the working distance each time set, within which the object is sufficiently focused to allow reading the optical information.

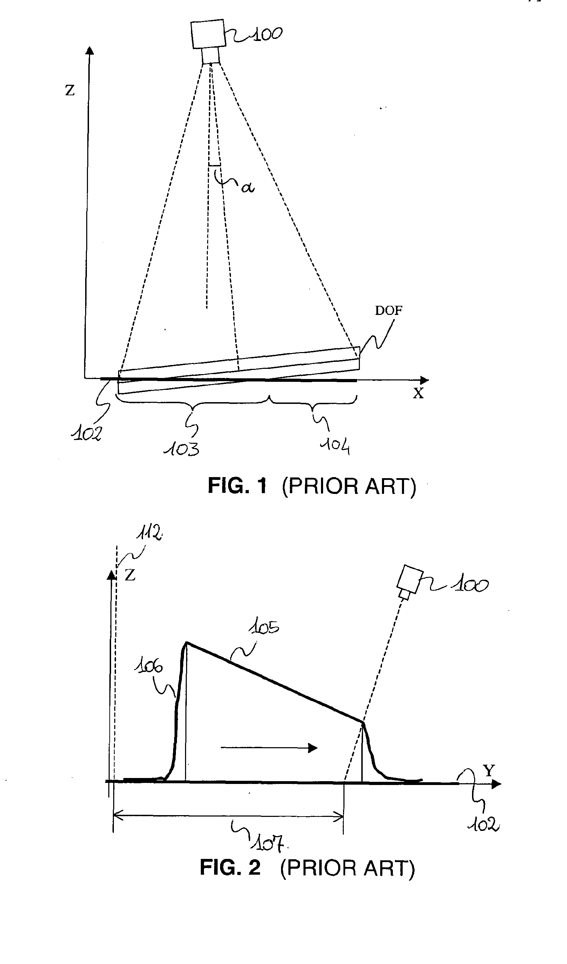

As shown in Figure 1, a slight error in the installation angle of the camera 100 with respect to the supporting plane 102 (angle a # 0 in Figure 1) may lead to errors in the optical path comparable with, or greater than, the depth of field DOF. The result is that the image may be focused in a first region 103 of the supporting plane 102, but out of focus in a second region 104 of the supporting plane 102, and therefore, as a whole, it will have a low quality, which makes it difficult to recognize the optical symbols or the characters.

In Figure 1 and in the successive Figures, axis X represents the transversal direction of the supporting plane 102, axis Z represents the vertical direction and axis Y (not shown in Fig. 1) represents the longitudinal direction of the supporting plane 102. In case of a moving supporting plane, axis Y further represents its moving direction.

The extreme precision of mounting is also necessary to guarantee a proper synchronism of the camera both in generating the start and end of image acquisition signals, and in controlling the autofocus system typically present in the camera. This is better illustrated hereinbelow.

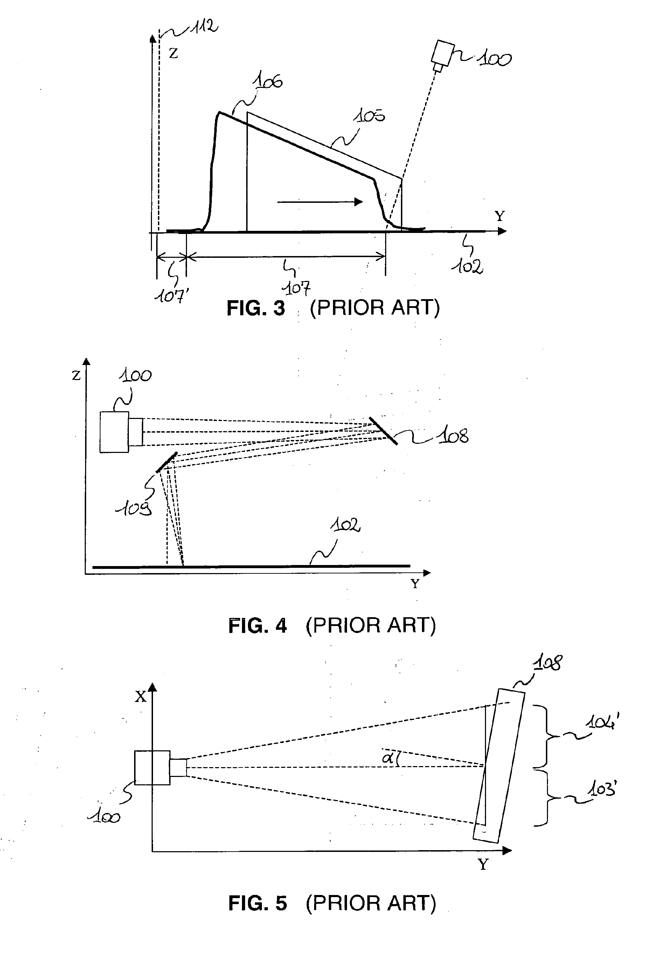

In Figures 2 and 3, it is shown how the focused surface of the camera driven by the autofocus system should be (Fig. 2) and how it is, on the contrary, in case of a position error with respect to a height sensor associated with the supporting plane 102 and providing to camera 100, in a manner known per se, a signal indicating the height of an object passing by the camera (Fig. 3). Line 105 represents the outline of an object, for example a parcel moving in the direction indicated by the arrow on the supporting plane 102, line 106 represents the focused surface of camera 100. In the former case (Fig. 2), the camera is at a correct distance 107 from the height sensor (not shown, but operating along the height measurement line 112). In such a case the lines 105 and 106 overlap and therefore the image quality is optimum. In the second case (Fig. 3), due to a position error 107' with respect to the height sensor, the camera 100 focuses the object 105 late and, therefore, it is out of focus. Similar problems arise if the camera 100 is not correctly positioned with respect to a presence sensor (not shown).

In order to ensure the maximum image quality, it is further necessary to optimize the position of the illumination system. The light needs to be as intense and uniform as possible on the whole acquisition zone (scan line in case of a linear camera) and at any height. This problem is even more exaggerated in solid state illumination systems with respect to the lamp ones, in that the former create, by their own nature, a light blade that is particularly thin, and therefore difficult to be centered with respect to the scan line.

The presence of deflecting mirrors external to a container of the camera leads to further problems.

Typically the acquisition distance of a camera of the type here of concern is rather long (the useful field of view may be placed at a distance of two to three meters from the camera). Such a distance is required for the field of view of the sensor of camera 100 to be able to cover the whole cross extent of the supporting plane 102 at any working distance, that is independently of the height of the articles. To install the camera directly over the supporting plane would require the presence of spaces that are not available (2-3 meters above the conveyor belt mean 3-5 meters above the floor).

The use of deflecting mirrors allows differently directing the field of view of the camera and therefore optimizing the encumbrance, as is shown in Figure 4 where two deflecting mirrors 108, 109 are shown, placed in such positions as to allow the height of the camera 100 with respect to the conveyor belt 102 to be remarkably decreased. Of course, alternative arrangements provide for using only deflecting mirror 108, or three or more deflecting mirrors (not shown).

In such a case it is necessary that the camera exactly aims at the center of the first deflecting mirror 108 in order to maximize the light returned from the scene aimed by the camera 100 and to avoid diaphgram-like effect of the return signal. Analogously, the mirror or mirrors 108 (,109,...) must be correctly positioned with respect to each other and to the supporting plane 102.

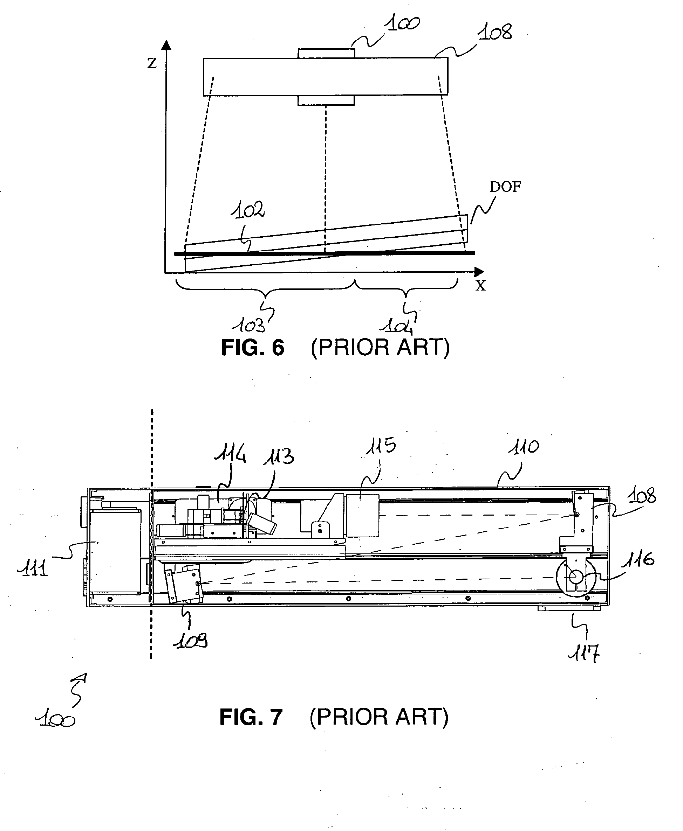

Small parallelism errors between camera 100 and mirrors 108 (,109,...) or between mirrors and supporting plane 102 may lead to focusing problems similar to that described with reference to Fig. 1. For example, in Figures 5 and 6 the case of a deflecting mirror 108 misaligned with respect to camera 100 in the plane X, Y is shown. A portion 103 of the acquisition zone (corresponding to a portion 103' of the deflecting mirror 108 in Figure 5) is focused, but a portion 104 of the acquisition zone (corresponding to a portion 104' of the deflecting mirror 108 in Figure 5) is out of focus.

It may therefore be easily understood that the installation of a camera -or more in general of the entire reading equipment- is a very complex, time consuming and critical process, requiring the presence of skilled technical staff, and bringing about notable installation costs. This is particularly true in case of a linear camera in that, by observing the acquired image, it is almost impossible to understand where the camera is looking at.

To allow the alignment of fixed linear cameras, special patterns having a known shape, such as triangular, are currently used. Such patterns are placed at predetermined positions of the conveyor belt and an image of the conveyor belt itself, bearing the pattern, is acquired. From the analysis of such an image it is possible to detect whether a portion of the pattern has been acquired and, thus, to understand at least roughly where the camera is looking at. The camera and/or the deflecting mirrors are moved until it is possible to see the pattern in the correct position within the image detected by the camera. Upon each correction attempt of a detected misalignment, the acquisition of the image of the conveyor belt bearing the special patterns must be repeated. To complete the installation, a lot of time and attention, as well as a thorough analysis of the pattern image, is required.

In case deflecting mirrors are used, the alignment operations are further longer and more difficult, because it is necessary to ensure that the camera is looking at the center of the useful area of each mirror, and it is not immediately recognizable whether the global misalignment is to be ascribed to the misalignment between the camera and the first mirror, between mirrors, and/or between the last mirror and the conveyor belt.

In case illuminators separate from the camera are used, similarly, the alignment operations are further slower and more complex.

Compact cameras, having an external optical path (that is, the reading equipment wherein the camera is associated to deflecting mirrors external to the camera container), are aligned through the special procedures described for checking the geometrical position of the whole system. This solution requires a very long adjustment time and highly specialized staff.

In order to facilitate the installation operation, reading equipment comprised of a camera with integrated and factory-calibrated optical path, that is to say that the entire optical path (namely comprising one or more deflecting mirrors) is inserted within a single container containing the camera, have been proposed. The illuminator may also be inserted and precalibrated with respect to the camera within the same container, as an alternative or in addition to the deflecting mirrors.

An example of such a camera 100 with integrated optical path, but without illuminator, is shown in Figure 7 and comprises, within a container 110, a supply and interface section 111 and an optical assembly. The optical assembly comprises, housed in an upper portion of container 110, a CCD sensor 113 provided with an autofocus system 114, a lens or lens system 115 in front of the CCD sensor 113, and a first deflecting mirror 108 in front of the lens or lens system 115. The optical assembly further comprises, housed in a lower portion of container 110, a second deflecting mirror 109 and a third deflecting mirror 116. The components of the optical assembly are arranged and oriented such as to establish an optical path from the CCD sensor 113, to the first deflecting mirror 108, to the second deflecting mirror 109, to the third deflecting mirror 116 and to a window 117 for light input (and for light output in case of a compact camera with illumination system housed in the same container of the camera) created in the bottom surface of container 110.

In case of such a camera 100 with integrated optical path, it is still necessary to guarantee the parallelism between the light input/output window 117 of container 110 and the supporting plane (leveling) and the centering of container 110 over supporting plane 102, namely the longitudinal axis of container 110 must be aligned with the longitudinal axis of the supporting plane 102, which is the axis Y oriented as the moving direction of the conveyed objects in case of a moving supporting plane.

The cameras with integrated optical path are however bulky, heavy and expensive. Further, from an application standpoint, they are less flexible than the solution with external mirrors and, in case of failure of a component, need to be totally replaced.

In case of cameras with a matrix sensor, the above described alignment problems are less critical because each image collected by the camera comprises a two-dimensional zone of the supporting plane, so that the supporting plane is immediately visible. However, the alignment check still requires the analysis of the image acquired by the camera, and arranging patterns on the transporting plane when it is monochromatic.

Further, the other highlighted critical factors, for example the possibility of a portion 104 of the supporting plane 102 being out of focus, or of the image of an object being out of focus due to the misalignment 107' with respect to the height or presence sensor, arise in such types of cameras too.

Finally, it should be noted that, as time passes, the alignment of the camera, and more in general of the optical reading equipment, may be altered due, for example, to a loosening of the fastening means, to a collision caused by a too big article passing by the camera, etceteras.

It is thus manifest that any tool allowing the installation to be optimized, and, if possible, the implementation of alignment diagnostic functions, will make the use of these fixed equipment reading systems easier.

The technical problem at the basis of the present invention is that of simplifying the installation of camera type optical reading equipment, both with a linear camera (line scan cameras), and with a matrix camera.

Another object of the present invention is that of allowing implementing an alignment diagnostic function of said equipment.

The inventive concept at the basis of the present invention is that of associating to a fixed optical reading equipment one or more aiming devices, namely elements for projecting a luminous figure, intended to be actuated during the steps of installation or of alignment diagnostic of the equipment.

The invention relates, in first aspect thereof, to a fixed optical equipment for acquiring optical information associated to at least an object placed on a supporting plane, comprising a camera having an array of photosensing elements for acquiring an image of an acquisition zone on the supporting plane, characterized by comprising aiming means suitable to generate a luminous aiming figure extended in at least a first direction having a predetermined geometric relationship with the view cone of the camera.

Through the luminous aiming figure, and because of its predetermined geometric relationship with the view cone of the camera, it is possible to install the camera without the need of acquiring and analyzing the images acquired by the camera itself. The installation is therefore easier and faster.

Particularly, the supporting plane may be moving, such as a conveyor belt.

Advantageously, the aiming means are controlled for switching on, and preferably also for switching off, by means for controlling the installation and/or the equipment alignment diagnostic.

The control means advantageously comprises a software, firmware or hardware installation and setup and/or alignment diagnostic routine.

Such a routine is preferably internal to the camera of the reading equipment.

Alternatively, such a routine is present in an external processing unit, connected to the reading equipment; in such a case, the routine is preferably managed by a Graphical User Interface (GUI).

During such an installation and setup routine, some parameters of the reading equipment, such as the digitalization thresholds of the reading signal as a function of the ambient light, the delay with respect to the signal of an article presence sensor and/or of an article height sensor as a function of the conveyor belt speed, etceteras, may further be set, in a manner known per se.

At the end of the installation and setup and/or alignment diagnostic, the aiming means are preferably switched off so as not to disturb the acquisition of the image by the camera in case the luminous aiming figure is internal to the field of view of the camera. In case the luminous aiming figure is external to the field of view of the camera, the aiming means may be switched off at the end of the above-mentioned routine so as to save energy and for avoiding the emission of potentially dangerous radiation; alternatively they may be left on to keep the diagnostic function continuously activated.

Alternatively, the aiming means may have a manually operated switch independent of a switch of the camera, so as to be switched on and off only at the time of the installation of the equipment or the check of its alignment.

Preferably the equipment further comprises means for acquiring the luminous aiming figure to check the alignment of the acquisition zone with respect to the supporting plane. Such means are particularly useful to check the fine alignment of the camera.

In order to facilitate the detection of misalignments occurred after the installation of the equipment, it may further comprise control-activated means for storing characteristic parameters of the output signal of the means for acquiring the luminous aiming figure and means for comparing characteristic parameters of the instantaneous output signal of the means for acquiring the luminous aiming figure with the parameters stored in said storing means.

In an embodiment, the comparing means comprises means for generating an alarm signal when the compared parameters differ by an amount greater than a predetermined threshold amount. An operator may thus provide for repeating the alignment procedure.

Alternatively or in addition, to accomplish an alignment self-correction, the equipment may comprise motor means for moving at least one of said camera, any reflecting means for reflecting the image of the acquisition zone on the array of photosensing elements and any illuminator means for illuminating the acquisition zone, and a unit controlling said motor means based on an output signal of said comparing means.

When said luminous aiming figure extends within the acquisition zone, the means for acquiring the luminous aiming figure are preferably comprised of said array of photosensing elements, namely of the camera itself. In such a case, a misalignment of the equipment is detected by the absence of the luminous aiming figure in the image acquired by the camera or by a displacement thereof within the acquired image.

Alternatively, the means for acquiring the luminous aiming figure may be distinct from said array of photosensing elements.

In such a case, they may be external to a container containing the camera.

For example, it is possible to use, as means for acquiring the luminous aiming figure, another camera of the whole reading equipment. In other words, in the reading installations comprising a plurality of cameras facing the supporting plane or conveyor belt, it is possible to accomplish a diagnostic function cross-exploiting, for example, the aiming devices and the photodetectors of camera pairs.

When said luminous aiming figure extends outside the acquisition zone, the means for acquiring the luminous aiming figure may comprise a reflecting surface. In such a case, a misalignment of the equipment is detected from the displacement of the reflected image of the luminous aiming figure, with the advantage that any misalignment is doubled by the reflection.

In some embodiments, the aiming means comprises means for generating at least two light beams, and the means for acquiring the luminous aiming figure comprises at least two receivers distinct from said array of photosensing elements. In such a case, a misalignment of the equipment may be detected from the lower intensity or from the absence of light on the receivers.

In a particularly preferred manner, said at least two receivers comprise two second photosensing elements having means for calculating the measure of the optical path of the light between said generating means and said second photosensing elements. In this manner it is possible to detect misalignments of the equipment based on a difference between the measurement carried out by the two photosensors or based on a change between the measurement carried out and the measurement previously stored at a correct alignment. Furthermore, the absolute value of the measurements may be exploited to install the equipment, or components thereof, at predetermined mutual distances, or with respect to the supporting plane.

The measurement of the optical path may be based on the phase-shift between the emitted and the received modulated laser light beams, or on the "time of flight" of a laser light pulse. Correspondingly, the aiming means may comprise means for generating at least two modulated laser light beams or means for generating at least two pulsed laser light beams.

Typically the equipment further comprises means for illuminating the acquisition zone.

The illumination means may be arranged in a common container with said camera.

Typically the equipment further comprises reflecting means for reflecting the image of the acquisition zone on the array of photosensors.

The reflecting means may also be arranged in a common container with said camera.

Alternatively or in addition, when the reflecting means comprises a first mirror external to a container of said camera, said aiming means may comprise means for generating two light beams in a plane parallel to a centerline of an objective of the camera, two second mirrors for deflecting the two light beams being provided, said second deflecting mirrors being integral with said first mirror and being at a predetermined angle with respect thereto. Such an arrangement allows correctly installing the camera with respect to the first mirror by simply checking that the light beams strike the two second deflecting mirrors.

In a preferred way, the reflecting means for reflecting the image of the acquisition zone on the array of photosensors further extend in the optical path between the aiming means and the supporting plane.

In some embodiments, the aiming means comprises means for generating at least a pair of light beams symmetrical with respect to an optical axis of an objective of the camera.

More particularly, said two light beams of said at least a pair may be arranged in central plane of the objective of the camera.

Furthermore, the two light beams may diverge or converge. When the beams diverge, the luminous aiming figure, formed by two light spots, extends more in said first direction, thereby facilitating the installation operations; when the beams converge, on the contrary, the displacement of the two light spots caused by a misalignment of the equipment is maximized.

The means for generating the or each pair of light beams comprises at least a laser or LED light source.

In an embodiment, the means for generating the or each pair of light beams comprises two laser light sources.

In an alternative embodiment, said means for generating the or each pair of light beams comprises a laser light source and two beam splitters.

In an alternative embodiment, said means for generating the or each pair of light beams comprises a laser light source, a beam splitter and a mirror.

In a still alternative embodiment, said means for generating the or each pair of light beams comprises a laser light source and means for scanning the laser light along a line symmetrical with respect to an optical axis of an objective of the camera, and arranged in a central plane of the objective of the camera.

The means for scanning may comprise an oscillating mirror or a rotary polygonal mirror.

In an alternative embodiment, said means for generating the or each pair of light beams comprises at least two LEDs.

In the various embodiments above, the aiming means may comprise at least a shaped diaphragm associated with each light source, be it laser or LED, for generating, as the extremes of the luminous aiming figure, spots of a predetermined shape, for example circular, linear, cross-shaped, etceteras.

Alternatively or in addition to the diaphragm, the aiming means may comprise at least a focusing lens associated with each light source, be it laser or LED.

In an embodiment, the aiming means comprises at least a pair of laser or LED light sources, arranged externally to the array of photosensors symmetrically with respect to an axis thereof, the light emitted by the light sources being focused by an objective of the camera.

Respective diaphragms may be associated with said light sources, as stated above.

When the light sources are arranged in contact with the sensor, their alignment with the array of photosensors is also particularly simplified.

In another embodiment, said aiming means comprises four sources for generating four light beams around the view cone of the camera.

Said four sources may be arranged two above the array of photosensors and two under the array of photosensors, the light emitted by the light sources being focused by an objective of the camera.

Respective diaphragms may be associated with said light sources, as stated above.

Preferably the four light sources are arranged in contact with the sensor.

The aiming means may be removably associated with the camera. For example, a container of the camera may comprise one or more clips for attaching one or more laser or LED aiming devices, self-supplied or provided with an electric connector for being supplied through the camera.

In an embodiment, the aiming means are external to a container containing the camera of the reading equipment, and said luminous aiming figure is internal to the field of view of the camera.

In all the embodiments, said array of photosensing elements may be linear or two-dimensional.

In a second aspect thereof, the invention relates to a reading system for acquiring optical information associated to at least an object, comprising a fixed optical equipment as described above and a moving supporting plane for receiving said at least an object.

In a third aspect thereof, the invention relates to a method for the installation of a fixed optical equipment for acquiring optical information associated to at least an object placed on a supporting plane, said equipment comprising a camera having an array of photosensing elements for acquiring an image of an acquisition zone on the supporting plane, and aiming means suitable for generating a luminous aiming figure extended along at least a first direction having a predetermined geometric relationship with the view cone of the camera, comprising the steps of:
a) installing said camera in a first plane parallel to the supporting plane at a first predetermined height above the supporting plane,
b) switching on the aiming means, and
c) aligning the camera moving it in said first plane until the luminous aiming figure has a desired alignment with respect to the supporting plane.

Preferably the step c) of alignment of the camera comprises the steps of:
d) checking whether said first direction extends along the transverse or longitudinal direction, respectively, of the supporting plane and whether the distances between the extremes of the luminous aiming figure in said first direction and the longitudinal edges of the supporting plane are equal, and:
   d1) in the negative case, rotating and/or translating said camera in said first plane and returning to the execution of said step d) of checking;
   d2) in positive case, ending said step c) of alignment of the camera.

Particularly in case the camera is not of the type with integrated optical path, the following steps may further be comprised:
e) installing a first deflecting mirror at a predetermined distance from the camera and at a second predetermined height above the supporting plane, and
f) centering the first deflecting mirror with respect to the supporting plane and leveling the axis of the first deflecting mirror with respect to the supporting plane, said step c) of alignment of the camera comprising the steps of:
g) moving the camera in said first plane until said first direction extends along the transverse or longitudinal direction, respectively, of the first deflecting mirror, and the distances between the extremes of the luminous aiming figure in said first direction and the respectively adjacent edges of the first deflecting mirror are equal, and
h) adjusting the angle of inclination of the first deflecting mirror until the luminous aiming figure has the desired alignment with respect to the supporting plane

When more mirrors are provided, the alignment will proceed one mirror at a time, so that there will be further the steps of:
e1) installing a second deflecting mirror at a predetermined distance from the first deflecting mirror and at a third predetermined height above the supporting plane,
f1) centering the second deflecting mirror with respect to the supporting plane, and leveling the axis of the second deflecting mirror with respect to the supporting plane, and
h1) adjusting the angle of inclination of the second deflecting mirror until said first direction extends along the transverse or longitudinal direction, respectively, of the second deflecting mirror, and the distances between the extremes of the luminous aiming figure in said first direction and the respectively adjacent edges of the second deflecting mirror are equal, and until the luminous aiming figure has the desired alignment with respect to the supporting plane.

In case the illuminator is not arranged in the same container of the camera, there will further be the steps of:
i) mounting an illuminator at a predetermined distance from the camera, and at a predetermined height above the supporting plane, and
j) adjusting the angle of inclination of the illuminator until the luminous aiming figure on the supporting plane has a desired alignment with respect to the zone illuminated by the illuminator.

In order to facilitate the check without having each time to measure the position of the extremes of the luminous aiming figure on the transporting plane, it may be comprised the step of k) arranging on the supporting plane target means indicating the expected position of the extremes of the luminous aiming figure along the transverse or longitudinal direction, respectively, of the supporting plane, and at equal distances from the longitudinal edges of the supporting plane.

Typically, said step a) comprises the substep of centering said camera with respect to the transverse direction of the supporting plane.

Typically, furthermore, said step a) comprises the substep of leveling said camera by a spirit-level.

When said aiming means comprises means for measuring a distance, said step a) may comprise the substep of measuring the distance of the camera from the supporting plane through the aiming means.

Alternatively, said step e) may comprise the substep of measuring the distance of the camera from said first deflecting mirror through the aiming means.

When said luminous aiming figure is at least partly internal to the field of view of the camera, the step of switching off the aiming means at the end of said step c) of alignment of the camera is comprised.

In view of a later check of the alignment of the equipment, the method for the installation may further comprise the step of storing in said equipment characteristic parameters of an image of the luminous aiming figure at the end of said step c) of alignment of the camera.

In a fourth aspect thereof, the invention relates to a method for the diagnostic of the alignment of a fixed optical equipment for acquiring optical information associated to at least an object placed on a supporting plane, said equipment comprising a camera having an array of photosensing elements for acquiring an image of an acquisition zone on the supporting plane, aiming means suitable for generating a luminous aiming figure extended along at least a first direction, and means for acquiring an image of the luminous aiming figure, comprising the steps of:
a) installing said camera in such a way that said acquisition zone has a desired alignment with respect to said supporting plane,
b) switching on said aiming means,
c) acquiring an image of the luminous aiming figure,
d) storing values of characteristic parameters of the acquired image,
e) acquiring a second image of the luminous aiming figure, and
f) checking whether values of the characteristic parameters of the second acquired image correspond with the values stored in said step d).

In the practice of the present invention, the step e) of acquiring a second image of the luminous aiming figure will typically occur after a prolonged use of the optical reading equipment, for example at each switching on of the optical reading equipment, or periodically.

When said luminous aiming figure comprises at least two luminous elements arranged in the field of view of the camera, said steps c) and e) of acquiring are preferably carried out through said camera.

Said characteristic parameters of steps d) and f) preferably comprise the distance of luminosity peaks corresponding to said two luminous elements with respect to a reference of the image acquired by the camera.

Said step d) of storing is preferably followed by a step of switching off the aiming means, and said step e) of acquiring the second image is preceded by a step of switching on again the aiming means.

In an embodiment, said aiming means are external to a container of the camera. This maximizes the displacement of the luminosity peaks as a consequence of a misalignment of the equipment.

Alternatively, and preferably when said luminous aiming figure is external to the field of view of the camera, said steps c) and e) of acquiring are carried out through acquisition means distinct from the camera.

The acquisition means distinct from the camera may comprise photosensing elements.

Alternatively, the acquisition means distinct from the camera may comprise a second camera of the fixed optical reading equipment.

Particularly, and preferably when said luminous aiming figure comprises at least two luminous elements external to the field of view of the camera, said steps c) and e) of acquiring may be carried out through two receivers distinct from said array of photosensors, and said characteristic parameters may comprise at least the presence or absence of light on said two receivers.

Advantageously, said aiming means comprises at least two light sources, said receivers comprise two second photosensing elements, and said characteristic parameters comprise the measure of the optical path of the light between said light sources and said second photosensing elements.

In such a case, said at least two light sources preferably are modulated or pulsed laser light sources.

The method for the diagnostic may further comprise the steps of placing an object on the supporting plane in said optical path, and checking whether the height of the object detected by a height sensor driving an autofocus device of the camera and the measure of said optical path conform.

Furthermore, the method may comprise the step of placing at least two deflecting mirrors in said optical path in order to double the displacements of the extremes of the luminous aiming figure caused by misalignments of the equipment.

In an embodiment, said step of placing at least two deflecting mirrors in said optical path comprises placing said at least two deflecting mirrors integral with at least a first deflecting mirror of said equipment, said at least a first deflecting mirror being for reflecting the image of the acquisition zone on the array of photosensing elements. In such a manner, the alignment of the camera with respect to the first mirror is immediately indicated by the fact that the light beams reflected by said at least two mirrors strike the respective sources, or targets near thereto.

Preferably, said step d) of storing is carried out with an illuminator of the optical equipment switched off. In such a way, the extremes of the luminous aiming figure are more apparent.

Although the method for diagnostic may be applied to traditionally installed equipment, preferably said step a) of alignment comprises the method for installation described above.

Further features and advantages of the present invention will better appear from the following detailed description of some preferred embodiments thereof, made with reference to the attached drawings. In the drawings, wherein Figures 1-7 have already been referred to:
- Figures 1 to 3 schematically show some types of reading problems due to a misalignment of a fixed camera type optical reading equipment;
- Figure 4 schematically shows a fixed camera type optical reading equipment with external deflecting mirrors, according to the prior art;
- Figures 5 and 6 schematically show further types of reading problems due to a misalignment of the equipment of Figure 4;
- Figure 7 shows an optical reading equipment comprised of a camera with integrated optical path;
- Figures 8 and 9 show a camera of a fixed optical reading equipment according to an embodiment of the present invention;
- Figure 10 schematically shows the relationship between the field of view of the camera of Fig. 8 and the light beams generated by aiming devices thereof;
- Figures 11-14 schematically show the camera of Fig. 8 in its respective fixed optical reading equipment, and the function of the light beams generated by aiming devices thereof;
- Figures 15-17 schematically show a first way of implementation of a method of installation of a fixed optical reading equipment according to the present invention;
- Figures 18-20 schematically show a second way of implementation of a method of installation of a fixed optical reading equipment according to the present invention;
- Figures 21-26 are schematic diagrams useful for an understanding of a method of diagnostic of the alignment of a fixed optical reading equipment according to the present invention;
- Figure 27 is a block diagram illustrative of a method of diagnostic of the alignment of a fixed optical equipment according to the present invention;
- Figure 28 schematically shows a third embodiment of a fixed optical reading equipment according to the present invention, modified with respect to the embodiment shown in Fig. 8;
- Figure 29 schematically shows a camera of a fixed optical reading equipment according to another embodiment of the present invention, and the relationship between its field of view and the light beams generated by aiming devices thereof; and
- Figures 30-31 schematically show a camera of a fixed optical reading equipment according to another embodiment of the present invention, and the relationship between its field of view and the luminous aiming figure, respectively.

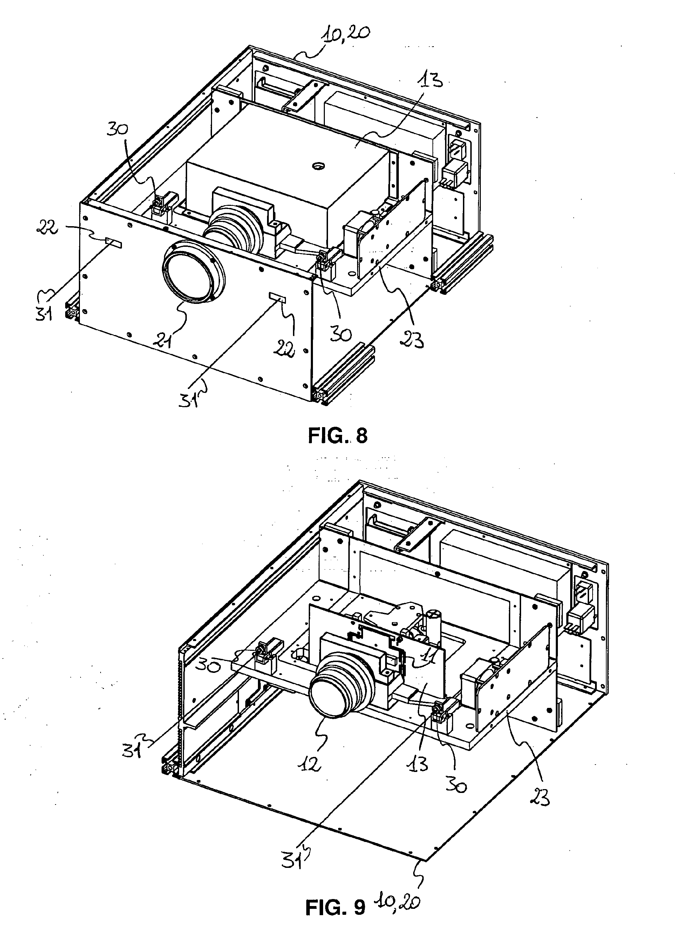

Figures 8 and 9 show a camera 10 having an array of photosensors 11, an objective 12 and an electronics 13 for processing the output signal of the photosensors. The camera 10 is mounted in a container 20 provided with a light input window 21, whereat the objective 12 of the camera extends.

According to the present invention, two laser aiming devices 30 are arranged in the middle plane of the array of photosensors 11, at the two sides of camera 10, and equally spaced from the axis of the objective 12, that is perpendicular to the array of photosensors 11. Two output slits 22 for the two laser light beams generated by the two laser aiming devices 30 are made in that wall of the container 20 comprising the light input window 21.

The camera 10 and the laser aiming devices 30 are mounted in the container 20 through a supporting element 23 properly shaped so as to ensure the mutual arrangement thereof, and the arrangement with respect to container 20.

Downstream of the light source in each laser aiming device 30, an objective (not shown) is preferably arranged, acting as a focusing lens of the emitted laser beam 31.

Downstream of the light source in each laser aiming device 30, still upstream of the objective if provided for, a shaped, for example circular, linear, cross-shaped, etc. diaphragm (not shown) may further be arranged. Alternatively, each objective may comprise a cylindrical lens for imposing a linear shape to the laser light beam 31.

Figures 8 and 9 show a camera 10 of the compact type, with light input window 21 for the objective 12, and output slits 22 for the laser light beam 31 emitted by the laser aiming devices 30, on a front wall of housing 20.

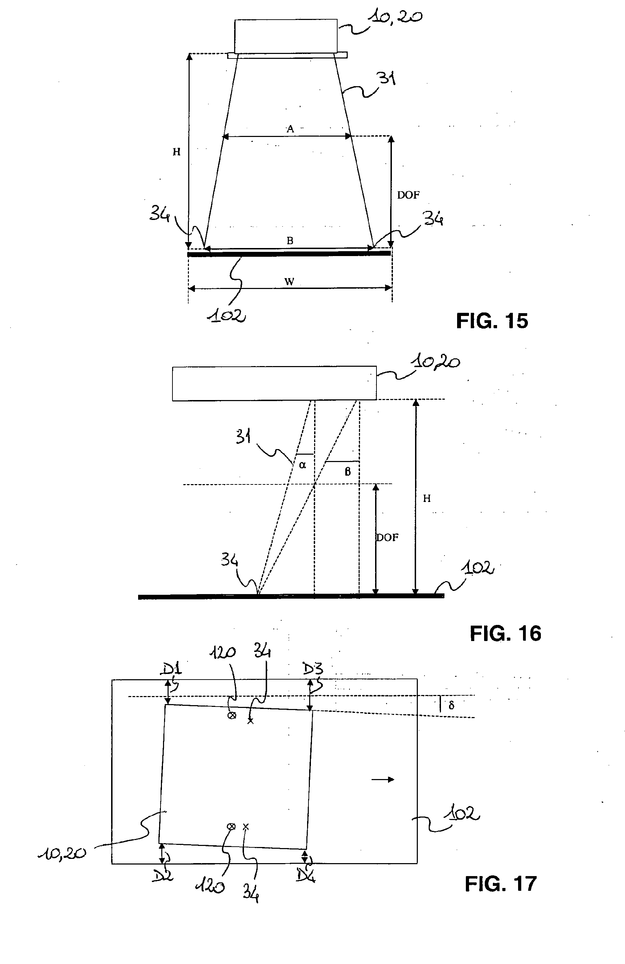

In case of a camera with integrated optical path, such light input window 21 and output slits 22 will typically be made in the bottom wall of housing 20. Refer to Figure 7 described in the introduction of the present description, and to Figures 15-17 later described.

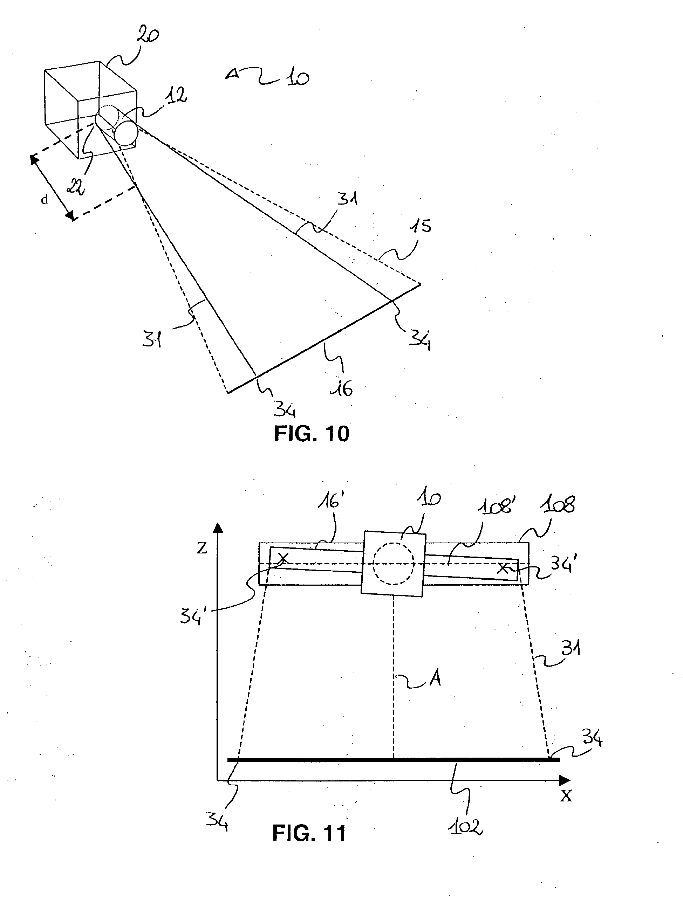

Figure 10 schematically shows, in case of a linear array of photosensors 11, that the mutual arrangement of camera 10 and laser aiming devices 30 is such that there is coplanarity of the beams 31 generated by the laser aiming devices 30 and the field of view 15 of the camera. In case of a two-dimensional array of photosensors 11, the coplanarity of the beams 31 and the middle of the field of view of the camera 10 will be ensured.

In case of Figure 10, the laser beams 31 diverge less than the field of view 15 does. Therefore, starting from a certain minimum distance d from the camera 10, the laser beams 31 generated by the two laser aiming devices 30 enter the field of view 15 of the camera 10, and thus generate two spots 34 (or different figures in case of a diaphragm) belonging to the view line 16 (or scan line) of the camera 10. The laser beams 31, or respectively the spots 34, are further perfectly symmetrically arranged within the field of view 15, or respectively within view line 16.

As above stated, the camera is provided to the user, and thus to the installer, with the laser aiming devices 30 already aligned with respect to the camera 10. Such an operation is carried out at factory, in a very precise manner.

In this manner, the laser spots 34 generated by the laser aiming devices 30 may be used for a fine positioning of the container 20 containing the camera 10 without requiring to display, let alone to analyze, the image of the supporting plane 102 seen by camera 10, that is without the need of switching on the camera 10. In case of a moving supporting plane or conveyor belt, it is not necessary to actuate the conveyor belt.

Particularly, the switching on and off of the laser aiming devices 30 is controlled by a signal controlled by proper control means. For example, the control means may be accomplished by a software, hardware or firmware installation and setup routine, stored in the electronics 13 of the camera 10 or in a processing unit external thereto. The installation routine may further manage other parameters of the reading equipment, such as the digitizing thresholds of the reading signal as a function of the ambient light, the delay with respect to the signal of an article presence sensor and/or of an article height sensor as a function of the conveyor belt speed, etceteras.

Once the installation is carried out, the laser aiming devices 30 are switched off by the above-mentioned routine, and therefore they do not disturb the normal operation of the camera 10.

Alternatively, there may be a switch (not shown) for the supply of the laser aiming devices 30, distinct from an on/off switch of the camera 10.

The spots 34 generated by the two laser aiming devices 30 may particularly be used for checking that the field of view 15 of the camera 10 is perfectly centered and has the desired slope with respect to the supporting plane 102, namely along axis X, and symmetrical with respect to axis Y, or with respect to one or more deflecting mirrors 108 (,109,116...) of the optical reading equipment.

Figure 11 shows, by way of an example, the case of a rotation (misalignment in plane X,Z) between the camera 10 and a deflecting mirror 108 arranged between the camera 10 and the supporting plane 102. The field of view 16' of the camera 10 at mirror 108 is shown. As is manifest in Fig. 11, the laser spots 34' generated by laser beams 31 at mirror 108 are external to the centerline 108' of mirror 108, particularly they are one (the left one) above the centerline 108' and one (the right one) below it. Such an arrangement of the laser spots 34' is indicative of a misalignment (rotation) between the camera 10 and the first mirror 108, a misalignment that, in the absence of the aiming devices 30, would not be detectable by the installer.

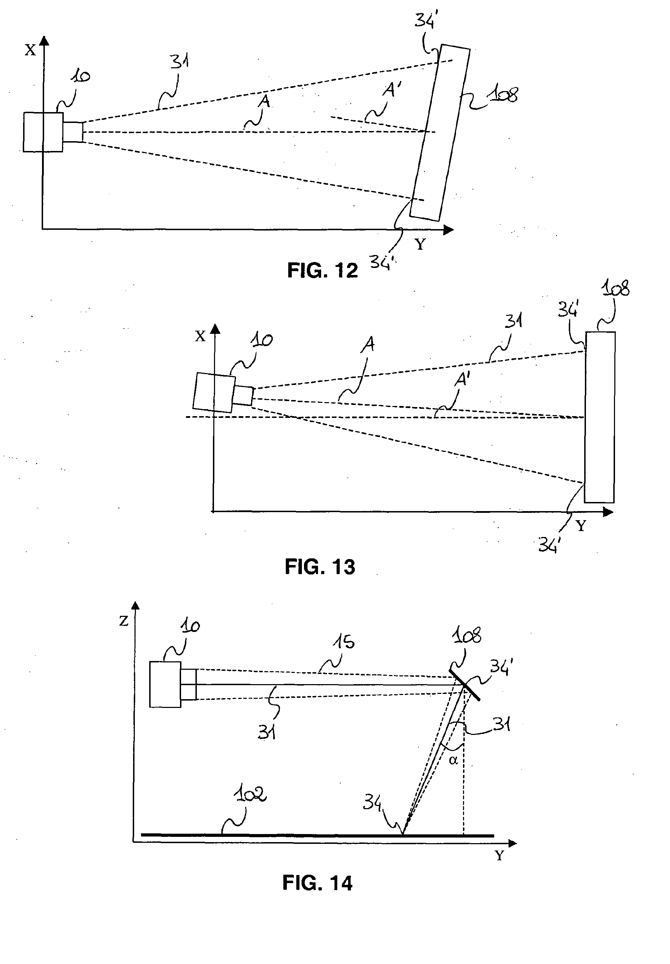

Figures 12 and 13 show, by way of an example, the case of errors of the parallelism between the axis A of the objective of the camera 10 and the axis A' of the mirror 108 (misalignment in plane X,Y), which turn out in a displacement of the laser spots 34' along the centerline 108' of mirror 108. More particularly, the laser spots 34' are not equally spaced from the axis of mirror 108, or from its edges.

Of course, the various misalignments may be present in combination, and will be analogously detectable by the visual indication provided by the laser spots 34' on the plane of mirror 108.

When the camera 10 and the mirror 108 are correctly aligned, the spots 34 generated by the laser beams 31 at the supporting plane 102 may be used to check the view angle a downstream of mirror 108, shown in Fig. 14 where the view cone 15 of the camera 10, of the type with a one-dimensional array of photosensors 11, is shown with a dotted line. Such a view angle a must be precisely adjusted because it must have a predetermined value depending on the specific application.

Preferred ways of implemention of methods of installation of a fixed optical reading equipment according to the present invention are now described.

For a fixed optical reading equipment comprising a totally integrated camera 10 (camera, mirror/s and illuminator in a same container, or only camera and illuminator in a same container, without external deflecting mirrors) provided with two aiming devices 30, the installation operation comprises the following steps, described with reference to Figures 15-17:
1) Installing the camera 10 (namely the sole container 20) at the required height H above the supporting plane 102 (conveyor belt) and centered with respect to its axis. It is to be noted that the height H at which the camera 10 has to be placed depends on the opto-electronic characteristics of the camera itself, and also on the type of application for which it is used.
2) Leveling the camera with respect to the plane of the conveyor belt 102, for example with the aid of a spirit-level.
3) Arranging on the conveyor belt a target 120 indicating the expected position of the view line 16 (or middle of the view zone in case of a matrix camera) and, therefore, the position where the spots 34 of the aiming laser beams 31 will have to strike. This step may be carried out with the aid of a meter, a square and possibly plumb-line. The target 120 may comprise two marks 120, the first arranged on one side with respect to the longitudinal axis of the supporting plane 102, and the second on the other side, and at an equal distance from the respectively adjacent longitudinal edge of the supporting plane 102.
4) Switching on the laser aiming devices 30.
5) Checking the alignment of the camera 10 at the edges of the conveyor belt 102. The position of the camera 10 is adjusted until the two spot 34 generated by the laser aiming devices 30 strike the respective marks on target 120. In this step, the presence of the two spots 34 on the supporting plane 102 allows adjusting the angle of the camera so that angle d is zero, and translating the camera 10 in the plane parallel to the supporting plane 102 at height H so that the camera 10 is perfectly centered, namely so that Dl=D2=D3=D4 holds true. Indeed, a misalignment of the camera 10, that is a non-zero angle d and/or distances Dl,D2,D3,D4 not all equal to each other, causes that the two laser spots 34 are along a straight line not transverse to the supporting plane 102 and/or at different distances from the longitudinal edges of the supporting plane 102 or, in other words, do not strike target 120, as shown in Figure 17.

In this case, the slope a of the view plane of the camera 10, the slope b of the angle of the illuminator and all the mutual positions between camera, any mirrors present within the container 20, and illuminator, are checked at factory.

In Figures 15-17, the depth of field DOF of the camera 10, the width A, B of the field of view of the camera 10 at the boundaries of the depth of field, and the width W of the supporting plane 102 are further shown.

Although placing the target 120 speeds up the installation operations because the measurements need to be carried out only once, it is also possible to avoid using the target 120, and to check the correct arrangement of the laser spots 34 (along a straight line transverse to the supporting plane 102, and at equal distances from its longitudinal edges) through direct measurement of the positions of the laser spots 34 on the supporting plane 102.

Furthermore, the centering of the camera 10 in above-mentioned step 1) may be avoided, because centering errors are detectable at any rate from the position of the spots 34 on the supporting plane 102 in above-mentioned step 5).

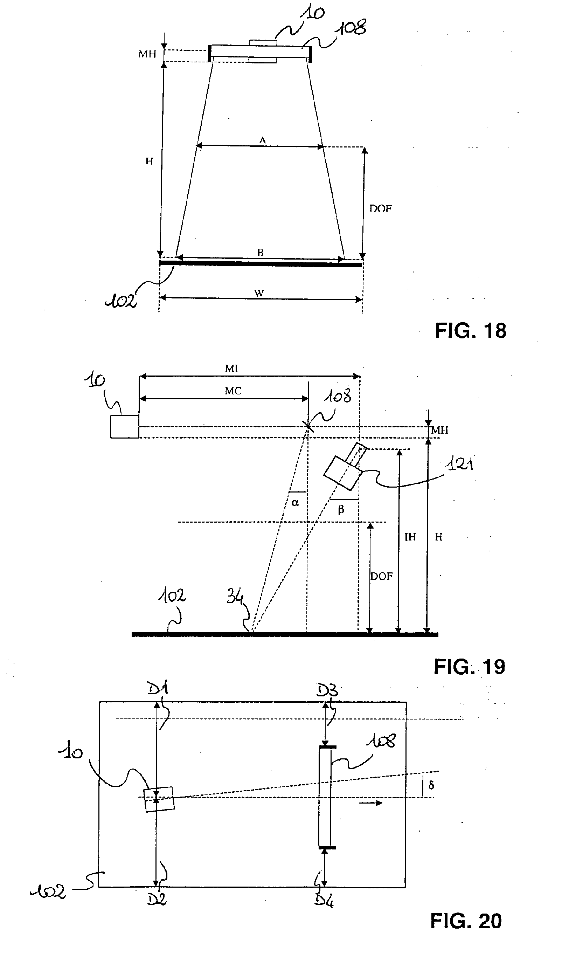

For a non-integrated system comprising a camera 10 provided with two aiming devices 30, a mirror 108, and an illuminator 121 in three distinct containers, the installation operation comprises the following steps (see Figures 18-20):
1') Installing the camera 10 at the requested height H above the supporting plane 102, and centered with respect to its axis (D1=D2).
2') Leveling the camera 10 with respect to the supporting plane 102.
3') Installing the mirror 108 at the requested distance MC from the camera 10, at height H+MH above the supporting plane 102, and centered with respect to its axis (D3=D4).
4') Leveling the axis of the mirror 108 with respect to the supporting plane 102.
5') Arranging on the supporting plane 102 a target (not shown, refer to Fig. 17) indicating the expected position of the view line 16 and, therefore, the position where the laser spots 34 will have to strike. This step may be carried out with the aid of a meter, a square, and possibly plumb-line.
6') Switching on the laser aiming devices 30.
7') Finely arranging the camera 10 so that the spots generated by the aiming devices are equally spaced with respect to the vertical axis of mirror 108 and centered on its horizontal axis (adjustment of the camera-mirror mutual height, and of angle d).
8') Adjusting the angle a of mirror 108 so that the two spots 34 strike the requested points of the target on the supporting plane 102. If the adjustment of a does not suffice (the spots 34 are not aligned or are not at equal distances from the edges of the supporting plane 102), checking the measurements carried out during the previous steps.
9') Mounting the illuminator 121 at the requested height IH, and at a distance MI from the camera 10.
10') Aligning the angle b of the illuminator 121 so that the light blade is optimally positioned with respect to the two laser spots 34, and therefore so that the two spots 34 strike the center of the luminous zone.

The same considerations as stated above with reference to the first way of implementation hold true here also.

When there are more deflecting mirrors (refer for example to Figure 4), the steps 3'-4' and 7'-8' have to be repeated for each mirror.

In case of a system comprising two units, thereamong (i) a container comprising the camera 10 and the mirror or mirrors 108 (,109,116,...), or only the camera 10, and (ii) a separate illuminator 121, the installation provides for the steps 1-5 of the first described way of implementation, plus the steps 9'-10' of the second described way of implementation.

In case of a system comprising two units, namely (i) a container comprising the camera 10 and the illuminator 121, and (ii) one or more separate mirrors 108 (,109,116,...), the installation provides for the steps 1'-8' of the second described way of implementation.

The provision of the aiming devices 30 according to the present invention may advantageously allow carrying out a diagnostic function capable of detecting dangerous misalignments of the optical equipment occurred during the normal operation of reading optical information.

Indeed it may happen that, during the normal life of the reading installation, for different reasons such as loosening of the attaching means, collisions from objects, etceteras, the various components of the equipment (camera 10, mirrors 108, 109, and illuminator 121) misalign with respect to each other and/or with respect to the supporting plane 102, as compared with the situation adjusted upon the initial installation.

The use of aiming devices 30 may periodically provide indications on the status of the alignment of the equipment.

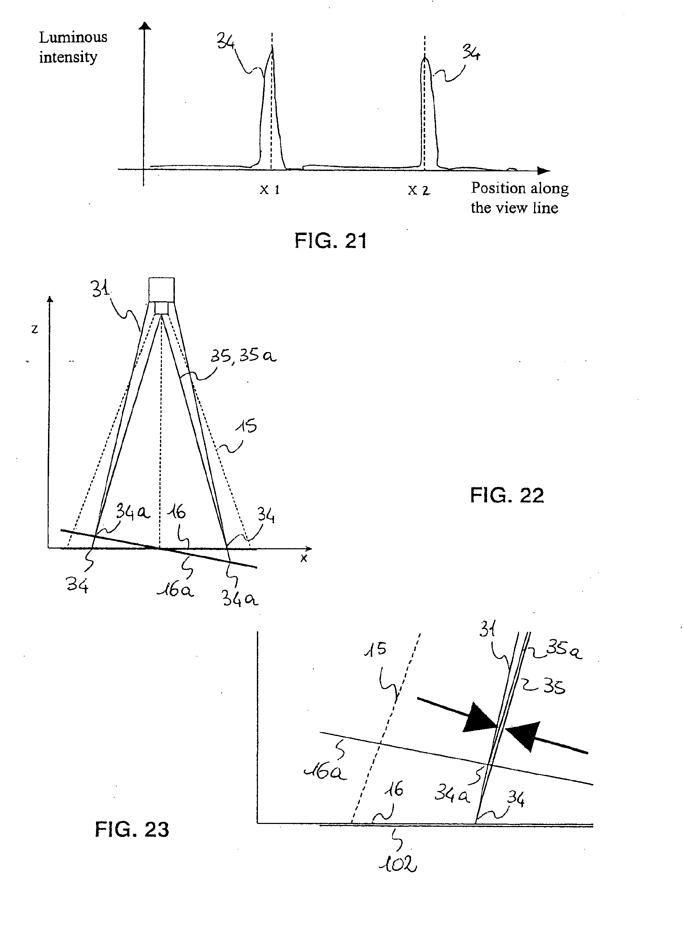

Indeed, if, upon having carried out the alignment and setup operation through the above-mentioned routine, the two laser aiming devices 30 are kept turned on, and the image (preferably with the illuminator 121 turned off) obtained by the array of CCD or C-MOS photosensors 11 is stored, the image acquired by the camera 10 shows a luminosity peak at each laser spot 34. Figure 21 schematically shows the luminous intensity detected by the camera 10 along the view line 16 in the above described conditions.

The following parameters may then be stored:
- distance X1 of the first spot 34 from the beginning of the scan line,
- distance X2 of the second spot 34 from the beginning of the scan line.

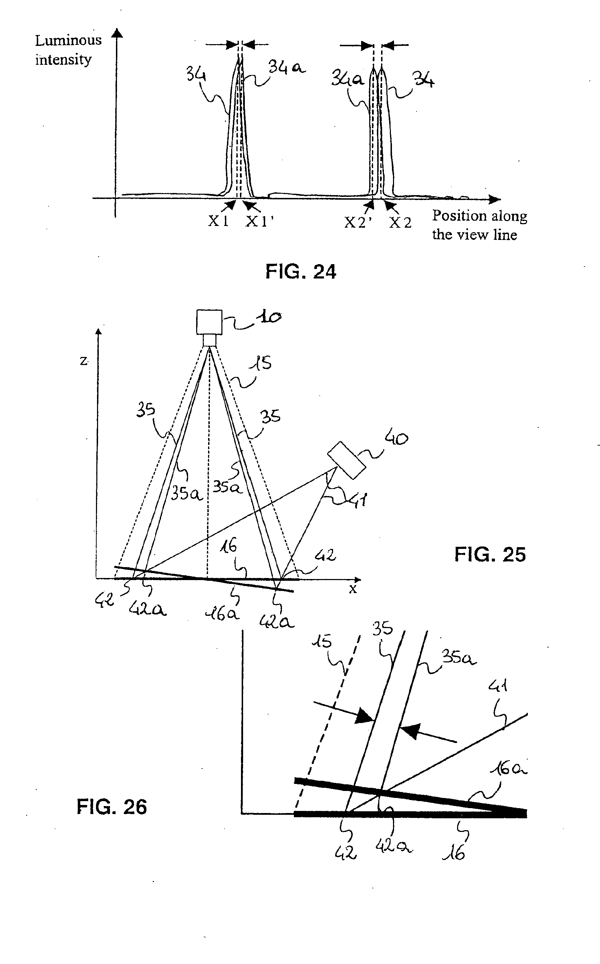

X1 and X2 should be constant over time. If, for any reason, the optical equipment/supporting plane system misaligns, the laser spots 34 tend, even if to a low degree, to displace, and therefore the distances tend to change, or also one or each of the laser spots 34 tend to disappear from the view line 16. The displacement of the spots from the position indicated with 34 when the alignment is correct (view line 16) to the position indicated with 34a when a misalignment occurred (view line 16a) is shown in Figure 22 and highlighted in Figure 23, which is a partial enlargement thereof. The displacement of the luminosity peaks, and the change in the distances from X1, X2 to X1', X2', are shown in Figure 24.

Indeed, even though, by its own structure, the laser rays 31 and the rays seen by the camera 10 are practically parallel, small displacements of the point of view lead to small displacements of the spots 34 seen by the camera (see lines 35, 35a).

In this manner, if periodically, for example at each switching on of the optical equipment, the values X1' and X2' are checked and compared with the corresponding values X1, X2 acquired immediately after the installation (stored in the camera 10 itself or in an external processing unit connected thereto), a useful indication of the state of alignment is provided.

The comparison may automatically occur through suitable software, hardware or firmware comparison means within the electronics of the camera 10.

In case the measured values X1' and X2' turn out not to be within a preset tolerance range about the stored values X1, X2, an alarm and maintenance request signal may be generated. This situation corresponds indeed to a misalignment between the camera 10, the mirror or mirrors 108 (,109,116,...), and the supporting plane 102 or plane of the conveyor belt.

It may be further advantageous to provide for one or more motors (not shown) to move the camera 10, any mirrors 108 (,109,116,...), and any illuminator 121, and a control unit (not shown and preferably integrated within the above-mentioned remote processing unit) of said motors, based on the output signal of the comparison means.

A greater sensitivity to the alignment changes may be obtained by arranging two aiming devices 40, alternatively or in addition to the two aiming devices 30, externally of the camera 10, and with independent optical path, for example as illustrated in Figure 25 and as highlighted in Figure 26, which is a partial enlargement thereof.

In Figure 25, such aiming devices 40 generating laser beams 41, are shown. The laser beams 41 form the spots 42 on the supporting plane 102, internally of the view line 16 in case of a correct alignment of the equipment, and the spots 42a internally of the view line 16a in case of misalignment. With 35, 35a, lines representing the optical path of the images of the spots 42, 42a seen by the camera 10 are indicated.

In this manner, to any misalignment of the camera or of the mirrors, a significant movement of the laser spots, or even their total disappearance from the view line 16a, would certainly correspond.

A very advantageous alternative, not strictly necessary for the alignment function, but extremely useful for the diagnostic function, even if more expensive, may be represented by the use of modulated laser light aiming devices, and of corresponding receivers of the same laser radiation. As is known, light modulation allows measuring the distance between the source and the receiver from the phase difference between the emitted and the received signal (phase shift), namely practically allows measuring the distance between the source and the supporting plane 102 or other element reflecting the laser beam that is interposed in the optical path of the laser beam.

According to such an alternative, besides the visual indication, an information on the distance between the aiming device 30 and the supporting plane 102 may thus be obtained. Therefore, when the aiming device is integral with the camera 10, the distance between the camera 10 and the supporting plane 102 may be calculated.

Alternatively, analogous devices may be used, based however on the principle of measurement of the "time of flight" of a laser pulse, as is well-known to the skilled in the art.

Also in this case, the measurement of the distance between the camera 10 and the supporting plane 102 may be carried out immediately after the installation, and it may be periodically checked to ensure that no misalignment occurred, alternatively or in addition to the measurement, storing and comparison of the distances X1,X2,X1',X2' of the laser spots 34, 42 within the scan line.

In case of aiming devices 30 integral with the camera 10, the fact that the two laser beams 31 are symmetrical with respect to the optical axis of the camera 10, and pre-aligned at factory, guarantees that the measurement obtained by the two receivers is equal in case of a correct alignment of the optical equipment.

Therefore, if as time passes the values provided by the receivers associated to the two aiming devices 30 change with respect to the initial values and/or if the two values differ from each other, again an error signal corresponding to the misalignment of the system is generated, or the other above described correcting measures are taken.

With respect to the solution with the laser emitters 30 having the mere function of visual indicators, this alternative allows for a greater precision of the periodic check of the status of alignment of the optical equipment, because errors of less than a centimeter may be measured.

A further advantage of this solutions is that it is possible to carry out a complete check operation also during the normal operation of the system, because it does not require the analysis of the image detected by the camera 10 (and thus it does not interrupt the normal acquisition of the information associated to the objects).

For example, when on the moving transport plane 102, under the camera 10, parcels of such a size as to simultaneously concern both the two laser spots 34 pass, besides the alignment of the optical equipment/transport plane system, also the quality of the height measurement system, that is normally used in connection with the camera 10 to provide information to any autofocus system on the height of the passing parcel, may be checked.

Since this operation could alter the acquired image (and therefore the reading) due to the presence of the laser spots 34 within the image itself, this operation will preferably be carried out on a sample parcel or on known surfaces between parcels, for example the surface of one of the platforms of a platform conveyor belt 102.

If the aiming devices 30 generate the spots 34 outside the field of view of the camera, the checking operation may be continuous.

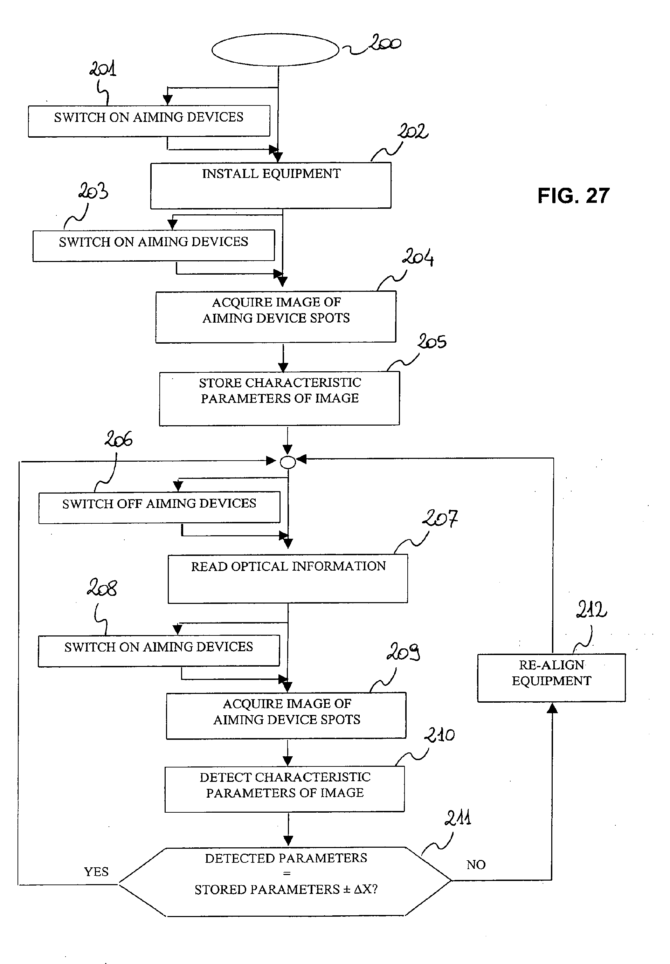

Figure 27 is a block diagram summarizing the method for the diagnostic of the alignment of the present invention. Starting from a block 200, there may be a first step of switching on the aiming devices (block 201), followed by a step of installation of the optical reading equipment (block 202). Block 201 is shown as optional, in that the method of the invention may be equally applied in case the equipment is installed with traditional methods, namely without the aid of aiming devices 30.

In case the first step 201 of switching on the aiming devices is not carried out, or in case aiming devices 40 external to the container 20 of the camera 10 are exclusively or additionally used, the step 202 of installation of the equipment is followed by a second step of switching on the aiming devices 30, 40 (block 203). Such a second step 203 of switching on the aiming devices is conversely omitted in case the first step 201 of switching on the aiming devices has already been carried out for all the aiming devices 30, 40 present.

Then the method goes on to a first step of acquisition of an image of the luminous aiming figure 34, 42 generated by the aiming devices 30, 40 (block 204). Such a step of acquisition 204 is carried out through the camera 10 itself or through special photodetectors, distinct therefrom.

The first step 204 of acquisition is followed (block 205) by a step of storing the values of characteristic parameters of the image acquired in the first step 204 of acquisition. Such characteristic parameters may comprise the presence or the position within the image of at least a point of the luminous aiming figure and/or the measure of the distance between the light source of each aiming device 30 and a detector associated thereto.

The step 205 of storing the values of characteristic parameters is followed by an optional step of switching off the aiming devices 30, 40 (block 206), which will preferably occur especially when the luminous aiming figure 34, 42 is within the field of view 16 of the camera 10.

The method goes on in either case with a step of normal use of the optical equipment for reading optical information (block 207).

When it is desired to re-check the correct alignment of the optical reading equipment, for example periodically or at each switching on of the equipment itself, the method may provide for a third step of switching on the aiming devices 30, 40 (block 208). It will be understood that whether or not the third step 208 of switching on the aiming devices 30, 40 is carried out in an execution of the method of the invention depends on whether or not the step 206 of switching off the aiming devices is carried out.

The method goes on in either case with a second step of acquisition of an image of the luminous aiming figure 34, 42 generated by the aiming device 30, 40 (block 209). As the first step of acquisition 204, the second step of acquisition 209 also occurs through the camera 10 itself or through the suitable photodetectors, distinct therefrom.

The second step of acquisition 209 is followed by a step (block 210) of detecting the values of the above-mentioned characteristic parameters of the image acquired in the second step 209 of acquisition.

The step 210 of detecting the values of the characteristic parameters is followed by a step (block 211) of comparison between the values stored in the step of storing 205 and the values detected in the step of detecting 210.

In case the comparison gives a positive result, namely in case the detected values coincide - possibly apart from a preset tolerance DX - with the stored values (output YES from block 211), the method returns to the normal use of the optical reading equipment (block 207), possibly preceded by the switching off of the aiming devices (block 206) .

In case the comparison gives a negative result, namely in case the detected values differ from the stored values - possibly by more than the preset tolerance DX- (output NO from block 211), the method provides for a step of re-alignment of the equipment (block 212) before returning to the normal use of the optical reading equipment (block 207), possibly preceded by the switching off of the aiming devices (block 206).

The step 212 of re-alignment of the equipment may be manual, at the most with the generation of an alarm signal, or it can be totally automated through the actuation of motors for correcting the position of the components of the optical reading equipment.

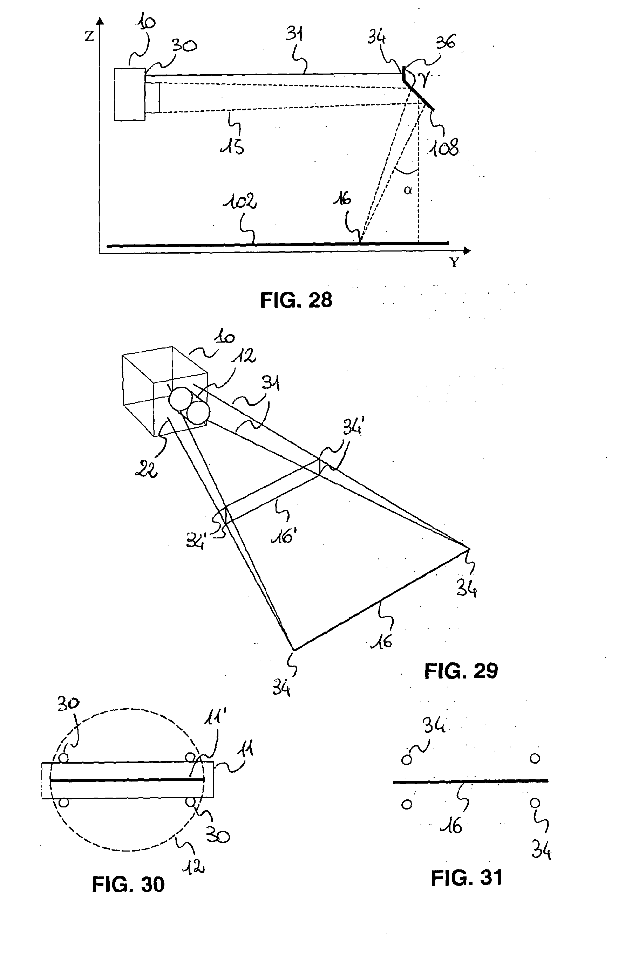

Alternatively or in addition to the embodiment described above, the laser beams 31 generated by the aiming devices 30 may be parallel to the field of view 16 of the camera 10, but not coplanar with the field of view 16. As illustrated in Figure 28, in this case the laser spots 34 strike two mirrors 36 arranged externally to the main optical path, namely externally to the field of view 15 of the camera 10, but integral with the deflecting mirror 108, and forming a predetermined angle γ therewith.

In order to ensure an extremely precise mutual arrangement between camera 10 and mirror 108, it is sufficient to check that the return beam of each laser aiming device 30 strikes exactly the emitter, a special photoreceiver or, in any case, a predetermined target for a visual comparison by an operator.

This solution is manifestly more complex because it provides for the further mirrors 36, but it allows an even more quick and precise positioning of the mirror 108 than the previous solution: any angular error is indeed doubled by the reflection on the auxiliary mirrors. It should be noted that, if used alternatively to the laser aiming devices 30 coplanar with the field of view, this solution does not allow checking the position of the spots on the supporting plane 102.

Also in this solution, using modulated or pulsed laser light and suitable receivers, it is further possible to check the alignment and the misalignment from the comparison of the measure of the distances of each of the two receivers to each other and with respect to the values stored at a correct alignment.

Alternatively to laser aiming devices 30 generating diverging beams 31 as previously illustrated, the laser aiming devices 30 may generate beams 31 that initially converge, and then cross before the supporting plane. In case of converging beams, in the diagnostic of the alignment, the enhancement of the differences between the positions X1', X2' of the laser spots 34' and the positions X1, X2 of the spots 34 at a correct alignment is maximized, in that the angle formed by the two beams 31 in case of converging beams is greater than in case of diverging beams.

The aiming devices 30 may also be arranged aligned and symmetrical with respect to the optical axis of the camera 10, but one above and the other below the array of photosensors 11. It will be appreciated that aiming devices so arranged allow just as well the installation of the camera 10, which will occur by checking that the extremes of the luminous aiming figure (namely, the spots 34) lie along a longitudinal axis of the supporting plane 102 or along a transversal axis of the deflecting mirror or mirrors 108 (,109,116,...) at equal distances from the edges.

Furthermore, the number of aiming devices 30 may be different from two. For example, one could think of using a different number of lasers, even a single laser suffices for the function of diagnostic of the alignment described above, as will be manifest.

With four lasers one could, for example, highlight the entire view cone, as illustrated in Figure 29 for the case of a linear camera 10. At the distance from the camera 10 corresponding to the optimum focusing, the laser spots 34 generated by the four beams 31 reduce to two, highlighting the view line 16, while at lower distances, the laser beams 31 generate four laser spots 34', delimiting a rectangular zone containing the view cone 15 of the camera 10.

In this case also, the aiming figures produced may be circular, linear, cross-shaped etceteras, by using a diaphragm placed between each laser and its objective.

Alternatively, a aiming line may be generated in lieu of single spots, for example by using, downstream of each laser, an objective with cylindrical lenses or a moving (rotary or oscillating) mirror, as is for example used for scanning the laser beam in the optical code readers using laser technology. The mirror could, for example, be arranged below the receiving objective of the camera.

Also, in lieu of two (or four) laser aiming devices 30, different optical systems may be used for generating the luminous aiming figure.

Thus, beam splitters may be used to reduce the number of lasers, the number of generated spots being equal. For example, a single laser source may be mounted on a side of the camera 10 and with two beam splitters, or a beam splitter and a mirror, another virtual source may be created on the other side.

According to another embodiment, sources different from laser sources may be used, for example LED sources or also filament bulbs associated with fiber optics. The LED sources may be associated with a diaphragm and/or an objective, as stated above for the laser aiming devices.

More advantageously, such sources may be arranged on the side of and in the same plane as the array of CCD photosensors 11, so as to exploit the main objective 12 in lieu of using an objective for each aiming device.

Figure 30 illustrates such an arrangement, wherein two LED or laser sources are arranged above the array of photosensors 11 and two LED or laser sources are arranged below it, both pairs being symmetrical with respect to the vertical axis of the array of photosensors 11. The sensing area of the array of photosensors 11 is further illustrated with 11'. Figure 31 illustrates the view line 16 and the four spots 34 of the luminous aiming figure on the supporting plane 102 (or on a deflecting mirror 108).

By further arranging the laser or LED sources 30 in direct contact with the array of photosensors 11, as shown in Fig. 30, the noticeable advantage that the aiming devices 30 are automatically aligned with respect to the field of view 16 of the camera 10, without the need of alignment at factory, also arises.

In an analogous embodiment (not shown), use of only two laser or LED sources may be provided, possibly with diaphragms, or two fiber optics ends, arranged along the longitudinal or transverse centerline and at the two sides of the array of photosensors 11, preferably in contact with it.

When the arrangement of the light sources of aiming devices 30 is such that the spots 34 strike outside the field of view 16 of the camera 10, in order to implement the above described alignment diagnostic, of course it will be necessary to provide for means distinct from the camera 10 (not shown) for acquiring the image of the spots 34.

For example,_it is possible to use another camera of the whole reading equipment, that is to say that, in reading installations comprising a plurality of cameras facing the supporting plane or conveyor belt, it is possible to accomplish a diagnostic function exploiting, for example in a crossed or cyclic manner, the aiming devices and the photodetectors of pairs of cameras.

In a further alternative, it is possible to provide the camera 10, instead of with aiming devices integral with and internal to the container 20, with attachments in a calibrated position for removable aiming devices.

Finally, although reference has mainly been made to linear cameras, it will be understood that the various embodiments described and the methods for the installation and the diagnostic of the alignment may be applied without changes also with matrix cameras.

## Claims

1. Fixed unattended optical equipment having a normal operation mode for acquiring optical information associated with a plurality of objects placed on a supporting plane (102), by a camera (10) having an array of photosensing elements (11) for acquiring an image of a predetermined acquisition zone (16) on the supporting plane (102), **characterized by** having an installation mode wherein said equipment is fixedly oriented with respect to said predetermined acquisition zone (16), and by comprising aiming means (30, 40) operative in said installation mode to generate a luminous aiming figure (34, 42) extended in at least a first direction having a predetermined geometric relationship with the view cone of the camera (10).

2. Equipment according to claim 1, **characterized in that** said supporting plane is moving.

3. Equipment according to any of the preceding claims, **characterized in that** the aiming means (30, 40) are controlled for switching on (201, 203, 208) by means for controlling the installation and/or the equipment alignment diagnostic.

4. Equipment according to claim 3, **characterized in that** the aiming means (30, 40) are controlled for switching off (206) by said control means.

5. Equipment according to claim 3 or 4, **characterized in that** said control means comprises an installation and setup and/or alignment diagnostic routine.

6. Equipment according to any of the preceding claims, **characterized by** comprising means (10, 204, 209) for acquiring the luminous aiming figure (34, 42) to check the alignment of the acquisition zone (16) with respect to the supporting plane (102).

7. Equipment according to claim 6, **characterized by** further comprising control-activated means (205) for storing characteristic parameters (X1, X2) of the output signal of the means (10, 204) for acquiring the luminous aiming figure, and means (211) for comparing characteristic parameters (X1', X2') of the instantaneous output signal of the means (209) for acquiring the luminous aiming figure with the parameters (X1, X2) stored in said storing means (205).

8. Equipment according to claim 7, **characterized in that** the comparing means (211) comprises means for generating an alarm signal when the compared parameters differ by an amount greater than a predetermined threshold amount (DX).

9. Equipment according to claim 7 or 8, **characterized by** comprising motor means for moving at least one of said camera (10), any reflecting means (108, 109, 116) for reflecting the image of the acquisition zone (16) on the array of photosensing elements (11), and any illuminator means (121) for illuminating the acquisition zone (16), and a unit (212) controlling said motor means based on an output signal of said comparing means (211).

10. Equipment according to any of claims 6-9, **characterized in that** said luminous aiming figure (34, 42) extends within the acquisition zone (16) and the means for acquiring the luminous aiming figure (34, 42) are comprised of said array of photosensing elements (11).

11. Equipment according to any of claims 6-10, **characterized in that** said means for acquiring the luminous aiming figure (34) are external to a container (20) containing the camera (10).

12. Equipment according to claim 11, **characterized in that** said luminous aiming figure (30) extends outside the acquisition zone (16) and the means for acquiring the luminous aiming figure (34) comprises a reflecting surface (36).

13. Equipment according to any of claims 6-9 or 11-12, **characterized in that** said aiming means (30, 40) comprises means for generating at least two light beams (31, 41) and the means for acquiring the luminous aiming figure comprises at least two receivers distinct from said array of photosensing elements (11).

14. Equipment according to claim 13, **characterized in that** said at least two receivers comprise two second photosensing elements having means for calculating the measure of the optical path of the light between said generating means and said second photosensing elements.

15. Equipment according to any of the preceding claims, **characterized by** comprising means (121) for illuminating the acquisition zone (16).

16. Equipment according to any of the preceding claims, **characterized by** comprising reflecting means (108, 109, 116) for reflecting the image of the acquisition zone (16) on the array of photosensors (11).

17. Equipment according to claim 16, **characterized in that** said reflecting means (108, 109, 116) comprises a first mirror (108) external to a container (20) of said camera (10), **in that** said aiming means (30) comprises means for generating two light beams (31) in a plane parallel to a centerline of an objective (12) of the camera (10), and **in that** two second mirrors (36) for deflecting the two light beams (31) are provided, said second deflecting mirrors (36) being integral with said first mirror and being at a predetermined angle (γ) with respect thereto.

18. Equipment according to claim 16 or 17, **characterized in that** said reflecting means (108, 109, 116) further extend in the optical path between the aiming means (30) and the supporting plane (102).

19. Equipment according to any of the preceding claims, **characterized in that** said aiming means (30, 40) comprises means for generating at least a pair of light beams (31) symmetrical with respect to an optical axis (A) of an objective (12) of the camera (10).

20. Equipment according to claim 19, **characterized in that** said two light beams (31) of said at least a pair are arranged in a central plane of the objective (12) of the camera (10).

21. Equipment according to claim 19 or 20, **characterized in that** said two light beams (31) converge.

22. Equipment according to any of the preceding claims, **characterized in that** said aiming means (30, 40) comprises at least a laser or LED light source.

23. Equipment according to claim 22, **characterized in that** said aiming means (30) comprise at least a shaped diaphragm associated with said at least a light source.

24. Equipment according to any of the preceding claims, **characterized in that** said aiming means (30) comprises at least a focusing lens associated with said at least a light source.

25. Equipment according to any of claims 22-24, **characterized in that** said aiming means (30) are removably associated with said camera (10).

26. Equipment according to any of claims 1-23, **characterized in that** said aiming means (30) comprises at least a pair of light sources (30) arranged externally to the array of photosensors (11) symmetrically with respect to an axis (A) thereof, the light emitted by the light sources (30) being focused by an objective (12) of the camera (10).

27. Equipment according to any of claims 1-24, **characterized in that** the aiming means (40) are external to a container (20) containing the camera (10) and said luminous aiming figure (42) is internal to the field of view (16) of the camera (10).

28. Equipment according to any of the preceding claims, **characterized in that** said array of photosensing elements (11) is linear.

29. Equipment according to any of the preceding claims, **characterized in that** said array of photosensing elements (11) is two-dimensional.

30. Reading system for acquiring optical information associated with at least an object, comprising a fixed unattended optical equipment according to any of the preceding claims and a moving supporting plane (102) for receiving said plurality of objects.

31. Method of operating a fixed unattended optical equipment for acquiring optical information associated with a plurality of objects placed on a supporting plane, said equipment comprising a camera (10) having an array of photosensing elements (11) for acquiring an image of a predetermined acquisition zone (16) on the supporting plane (102), and aiming means (30) suitable for generating a luminous aiming figure (34) extended along at least a first direction having a predetermined geometric relationship with the view cone (15) of the camera (10), comprising the steps of:
a) installing said camera (10) in a first plane parallel to the supporting plane (102) at a first predetermined height (H) above the supporting plane (102),
b) switching on the aiming means (30),
c) aligning the camera (10) moving it in said first plane and fixing it when the luminous aiming figure (34) has a predetermined alignment with respect to the acquisition zone (16), and
z) operating the equipment for acquiring a plurality of images of the predetermined acquisition zone (16) on the supporting plane (102).

32. Method according to claim 31, **characterized in that** said step c) of alignment of the camera (10) comprises the steps of:
d) checking whether said first direction extends along the transverse (X) or longitudinal (Y) direction, respectively, of the supporting plane (102) and whether the distances between the extremes of the luminous aiming figure in said first direction and the longitudinal edges of the supporting plane (102) are equal, and:
d1) in the negative case, rotating and/or translating said camera (10) in said first plane and returning to the execution of said step d) of checking;
d2) in positive case, ending said step c) of alignment of the camera (10).

33. Method according to claim 31 or 32, comprising the steps of:
e) installing a first deflecting mirror (108) at a predetermined distance (MC) from the camera (10) and at a second predetermined height (H+MH) above the supporting plane, and
f) centering the first deflecting mirror (108) with respect to the supporting plane (102) and leveling the axis of the first deflecting mirror (108) with respect to the supporting plane (102), and wherein said step c) of alignment of the camera (10) comprises the steps of:
g) moving the camera (10) in said first plane until said first direction extends along the transverse or longitudinal direction, respectively, of the first deflecting mirror (108) and the distances between the extremes of the luminous aiming figure (34') in said first direction and the respectively adjacent edges of the first deflecting mirror (108) are equal, and
h) adjusting the angle (a) of inclination of the first deflecting mirror (108) until the luminous aiming figure (34) has the desired alignment with respect to the supporting plane (102).

34. Method according to any of claims 31-33, further comprising the steps of:
i) mounting an illuminator (121) at a predetermined distance (MI) from the camera (10) and at a predetermined height (IH) above the supporting plane (102), and
j) adjusting the angle of inclination (b) of the illuminator (121) until the luminous aiming figure (34) on the supporting plane (102) has a desired alignment with respect to the zone illuminated by the illuminator (121).

35. Method according to any of claims 31-34, **characterized by** comprising the step k) of arranging (102), on the supporting plane, target means (120) indicating the expected position of the extremes of the luminous aiming figure (34) along the transverse (X) or longitudinal (Y) direction, respectively, of the supporting plane (102), and at equal distances (D1,D2,D3,D4) from the longitudinal edges of the supporting plane (102).

36. Method according to claim 31, **characterized in that** said aiming means (30) comprises means for measuring a distance, and said step a) comprises the substep of measuring the distance of the camera (10) from the supporting plane (102) through the aiming means (30).

37. Method according to claim 33, **characterized in that** said aiming means (30) comprises means for measuring a distance, and said step e) comprises the substep of measuring the distance of the camera (10) from said first deflecting mirror (108) through the aiming means (30).

38. Method according to any of claims 31-37, **characterized in that** said luminous aiming figure (34) is at least partly internal to the field of view (16) of the camera (10), comprising the step of switching off the aiming means (30) at the end of said step c) of alignment of the camera (10).

39. Method according to any of claims 31-38, comprising the step of storing in said equipment characteristic parameters of an image of the luminous aiming figure at the end of said step c) of alignment of the camera.

40. Method for the diagnostic of the alignment of a fixed optical equipment for acquiring optical information associated with at least an object placed on a supporting plane (102), said equipment comprising a camera (10) having an array of photosensing elements (11) for acquiring an image of an acquisition zone (16) on the supporting plane (102), aiming means (30, 40) suitable for generating a luminous aiming figure (34, 42) extended along at least a first direction, and means (10, 204, 209) for acquiring an image of the luminous aiming figure (34, 42), comprising the steps of:
a) installing (202) said camera (10) in such a way that said acquisition zone (16) has a desired alignment with respect to said supporting plane (102),
b) switching on (201, 203) said aiming means (30, 40),
c) acquiring (204) an image of the luminous aiming figure (34, 42),
d) storing (205) values of characteristic parameters (X1, X2) of the acquired image,
e) acquiring (209) a second image of the luminous aiming figure (34, 42), and
f) checking (211) whether values (X1', X2') of the characteristic parameters of the second acquired image correspond with the values (X1, X2) stored in said step d).

41. Method according to claim 40, **characterized in that** between said step d) and said step e) a step (207) of using said optical reading equipment for reading optical information is carried out.

42. Method according to claim 40 or 41, **characterized in that** said luminous aiming figure (34, 42) comprises at least two luminous elements (34, 42) internal to the field of view (16) of the camera (10), said steps c) and e) of acquiring (204, 209) are carried out through said camera (10), said characteristic parameters comprise the distance (X1, X2, X1', X2') of luminosity peaks corresponding to said two luminous elements (34, 42) with respect to a reference of the image acquired by the camera (10), said step d) of storing (205) is followed by a step of switching off (206) the aiming means, and said step e) of acquiring (209) a second image is preceded by a step of switching on again (208) the aiming means (30, 40).

43. Method according to any of claims 40-42, **characterized in that** said aiming means (40) are external to a container (20) of the camera (10).

44. Method according to any of claims 40-42, **characterized in that** said steps c) and e) of acquiring (204, 209) are carried out through two receivers distinct from said array of photosensors (11), and said characteristic parameters comprise at least the presence or absence of light on said two receivers.

45. Method according to claim 44, **characterized in that** said aiming means (30) comprises at least two light sources (30), said two receivers comprise two second photosensing elements, and said characteristic parameters comprise the measure of the optical path of the light between said light sources (30) and two second photosensing elements.

46. Method according to claim 45, comprising the steps of placing an object on the supporting plane (102) in said optical path, and checking whether the height of the object detected by a height sensor driving an autofocus device of the camera (10) and the measure of said optical path conform.

47. Method according to claim 45, comprising the step of placing at least two deflecting mirrors (36) in said optical path.

48. Method according to claim 47, **characterized in that** said step of placing at least two deflecting mirrors (36) in said optical path comprises placing said at least two deflecting mirrors (36) integral with at least a first deflecting mirror (108) of said equipment, said at least a first deflecting mirror (108) being for reflecting the image of the acquisition zone (16) on the array of photosensing elements (11).

49. Method according to any of claims 40-48, **characterized in that** said step d) of storing (205) is carried out with an illuminator (121) of the optical equipment switched off.

50. Method according to any of claims 40-49, **characterized in that** said step a) of alignment (202) comprises the method for installation according to any of claims 31-39.
